# EUROPEAN PATENT APPLICATION

(11) **EP 4 749 540 A1**
(43) Date of publication of application: **27.05.2026**
(21) Application number: 25754761.2
(22) Date of filing: 07.02.2025
(51) Int. Cl.: G06Q 10/04

(54) **COMPONENT DEMAND PREDICTION DEVICE**

(30) Priority: 13.02.2024 JP 2024019614
(71) Applicant: Hitachi Construction Machinery Co., Ltd., Tokyo 110-0015 (JP)
(72) Inventor: MURO, Keiro, Tokyo 100-8280 (JP); ARIMA, Yoichi, Tokyo 100-8280 (JP); TAKAMI, Hiroki, Tokyo 110-0015 (JP)
(74) Representative: Manitz Finsterwald Patent- und Rechtsanwaltspartnerschaft mbB
(86) International application number: PCT/JP2025/004040
(87) International publication number: WO 2025/173646

(57) **Abstract**

An object of the present invention is to provide a technique capable of accurately predicting demand even for components with a small number of order reception history data counts. A component demand prediction method according to the present invention decomposes an order reception log into order reception-usage purpose data and usage purpose-component data, and predicts an order reception interval for a component item for each usage purpose on the basis of the order reception-usage purpose data.

## Description

### Technical Field

The present invention relates to a technique of predicting component demand.

### Background Art

For manufacturing and sales companies of machines including construction machines, accurate prediction of demand or received order volume for components for use in machine repair is important. This is because highly accurate prediction could reduce the safety inventory amount, thereby allowing for component inventory cost reduction.

Patent Literature 1 describes a technique of segmenting customers. Specifically, a technique is described in which components are segmented into seasonal, semi-seasonal, non-seasonal, and unexpectedly ordered items, and demand is predicted using different methods for each segment.

### Citation List

### Patent Literature

Patent Literature 1: US 2008/0082386 A1

### Summary of Invention

### Technical Problem

For accurate prediction of component demand, the order reception history data count is required in a large number to some extent. However, items with intermittent demand (e.g., components with an annual shipment count of 100 or less) have a small number of history data counts, which makes it difficult to predict demand. For segmenting customers or observing a trend change in demand, the data counts are even more insufficient.

The present invention has been made in view of the aforementioned problems and has an object of providing a technique capable of accurately predicting demand even for components with a small number of order reception history data counts.

### Solution to Problem

A component demand prediction method according to the present invention decomposes an order reception log into order reception-usage purpose data and usage purpose-component data, and predicts an order reception interval for a component item for each usage purpose on the basis of the order reception-usage purpose data.

### Advantageous Effects of Invention

According to a component demand prediction method according to the present invention, it is possible to accurately predict demand even for components with a small number of order reception history data counts. Problems, configurations, and advantageous effects other than those described above will become apparent from the description of the following embodiments.

### Brief Description of Drawings

Fig. 1 is a schematic diagram explaining the basic concept of a component demand prediction method according to Embodiment 1.
Fig. 2 is an example of visually presenting prediction results according to Embodiment 1.
Fig. 3 is a configuration diagram of a component demand prediction device 100 according to Embodiment 1.
Fig. 4 is a flowchart illustrating a conventional component demand prediction method.
Fig. 5 is an overall flowchart explaining a method for predicting, by a component order reception model constructing section F00, an order reception interval for each component.
Fig. 6 shows the structure and a data example of a component order reception log D01.
Fig. 7 is an example of an order reception × component matrix D02.
Fig. 8 is an example of an order reception × component matrix D03.
Fig. 9 is a flowchart explaining processing procedures performed by a matrix decomposition section F01.
Fig. 10 is a flowchart explaining processing procedures performed by a repair log extraction section F02.
Fig. 11 is a flowchart explaining processing procedures performed by an order reception interval model constructing section F03.
Fig. 12 is a flowchart explaining processing procedures performed by a component order reception model constructing section F04.
Fig. 13 is a flowchart explaining processing procedures performed by a customer segment extraction section F05.
Fig. 14 is an overall flowchart explaining another method for predicting, by the component order reception model constructing section F00, the order reception interval for each component.
Fig. 15 is an example of a user interface provided by the component demand prediction device 100.
Fig. 16 is an example of a user interface provided by the component demand prediction device 100.

### Description of Embodiments

### <Embodiment 1: Basic concept>

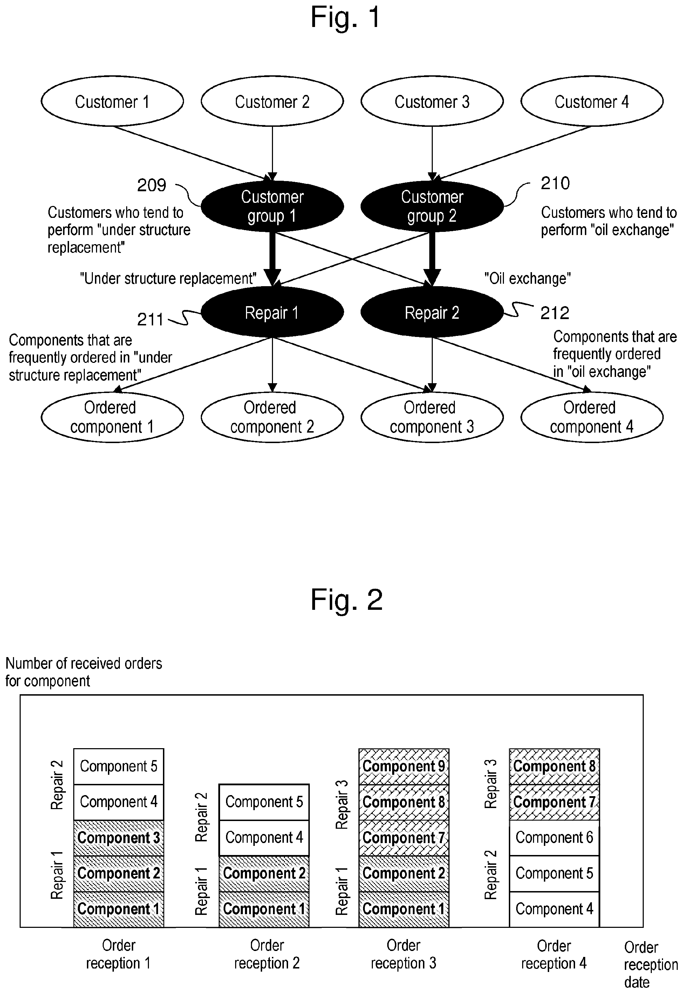

Fig. 1 is a schematic diagram explaining the basic concept of a component demand prediction method according to Embodiment 1 of the present invention. This example presumes a situation in which multiple customers (Customers 1 to 4 in Fig. 1) each place orders for various components (Ordered Components 1 to 4 in Fig. 1), and a component supplier receives the orders. The component supplier seeks to perform accurate demand prediction (the same in meaning as placed order prediction or received order prediction) for each component. The present embodiment relates to a method for such demand prediction.

In general, accurate prediction of which component each customer will order is difficult. Thus, the present embodiment divides a prediction process into two stages. The prediction is based on the premise that order reception history data for each component has already been acquired for each customer. A white oval in Fig. 1 indicates that the history data exists. A black oval indicates data that is derived through prediction since no history data exists.

It is assumed that the customer places an order for a component when repairing a machine using the component. For example, in the case of repairing a hydraulic excavator, which is one of construction machines, when a customer places an order for a component, it is assumed that multiple repair works, such as "under structure replacement" and "oil exchange," are performed together. Thus, the present embodiment predicts the interval of repairs being performed (ex. interval of repairs of the under structure being performed) instead of an interval of orders being placed. This aims to increase the data counts that can be used for prediction. Further, the customers are grouped (209, 210) for each repair item (ex. customer 209 who tends to repair the under structure). However, since there is no record of what repair has been performed by the customer, the repair item is estimated on the basis of order reception record data.

In the example shown in Fig. 1, two repair items, Repair 1 (211) "under structure replacement" and Repair 2 (212) "oil change," are presumed and the customers are grouped (209, 210) for each repair item that the customers tend to perform. In this manner, the customers can be classified into two customer groups 209 and 210. Further, the probability of a component to be ordered in each repair item is predicted for each repair item. In other words, first, the probability that the customer performs the repair item is predicted, and further, the probability of the component to be ordered in each repair item is predicted. Through such two stages of prediction, the probability that the customer places an order for the component (and the order placing interval) is predicted.

With the prediction process as described above, it is considered possible to accurately predict the order reception interval even for components with intermittent demand with a small number of order reception history data counts. This is because the data counts can be increased by predicting the repair item as a new data item. Further, since the characteristics of customers (such as diligently performing maintenance work or using a specialized construction machine) can be estimated by classifying the customers by the repair purpose, advice for component sales promotion can be established based on such estimation.

Fig. 2 is an example of visually presenting prediction results according to the present embodiment. The horizontal axis represents order reception date, and the vertical axis represents the number of components for which the order is received. The components for which the orders are received on each order reception date and their quantities, as well as repair items for which each component is used are presented. In this manner, it is possible to predict, for each repair item, the components ordered in the repair item and to present the results.

### <Embodiment 1: System configuration>

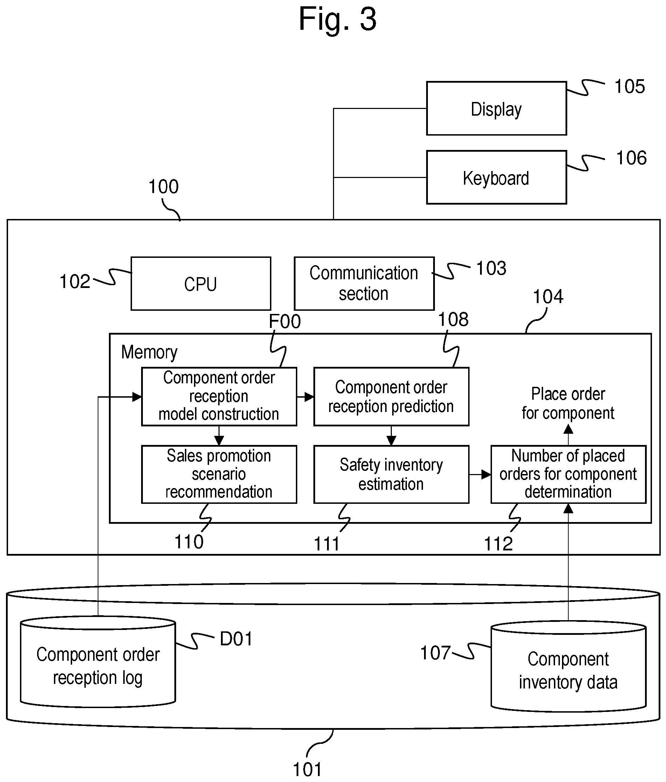

Fig. 3 is a configuration diagram of the component demand prediction device 100 according to Embodiment 1. The component demand prediction device 100 is a device that performs the component demand prediction method illustrated in Fig 1. The component demand prediction device 100 includes a storage device 101, a CPU (Central Processing Unit) 102, a communication section 103, a memory 104, a display 105, and a keyboard 106.

The storage device 101 is a storage device that stores component inventory data 107 and a component order reception log D01. These pieces of data will be described later. The communication section 103 communicates with the other devices. The display 105 is a device that displays results of processing performed by the CPU 104 and can present a screen as shown in Fig 2, for example. The keyboard 106 is an interface through which a user inputs instructions to the component demand prediction device 100.

The memory 104 is a storage device that stores data used by the CPU 102. The memory 104 stores, as software modules executed by the CPU 102, a component order reception model constructing section F00, a sales promotion scenario recommendation section 110, a component order reception prediction section 108, a safety inventory estimation section 111, and a number of placed orders for component determination section 112.

The component order reception model constructing section F00 includes sub-modules, which will be described later. The component order reception model constructing section F00 constructs a model used for estimating a component order reception interval using the sub-modules and the component order reception log D01. The outline of the construction method is described in Fig. 1 and Fig. 2. The specific method will be described later.

The sales promotion scenario recommendation section 110 constructs advice for component sales promotion using an order reception interval model constructed by the component order reception model constructing section F00 and the customer classification results. The order reception interval model includes a model that describes the order reception interval for each repair item and a model that describes the order reception interval for each component item. Both models can be used.

The component order reception prediction section 108 predicts the order reception interval for each component using a component order reception interval model constructed by the component order reception model constructing section F00. The safety inventory estimation section 111 estimates the safety inventory for each component on the basis of the predicted component order reception interval. The number of placed orders for component determination section 112 determines the number of placed orders for each component on the basis of the estimated safety inventory and the component inventory data 107.

### <Embodiment 1: Conventional prediction method>

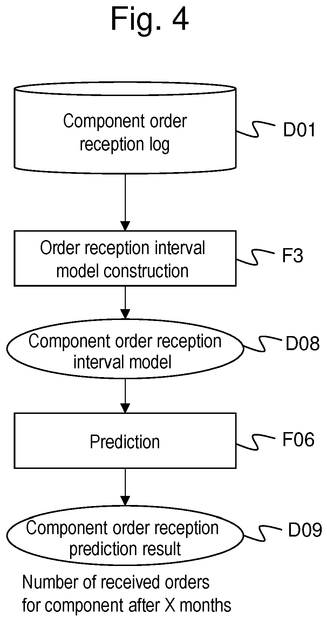

Fig. 4 is a flowchart illustrating a conventional component demand prediction method. Conventionally, a component order reception interval model D08 that mathematically describes the order reception interval for each component is constructed using the component order reception log D01 (F3). Further, using the model, the number of received orders for each component is predicted (F06). The prediction result is stored in the storage device 101 as a component order reception prediction result D09.

The conventional prediction method as shown in Fig. 4 predicts the order reception interval for each component directly from the component order reception log DO1. Therefore, in general, it is difficult to accurately predict the order reception interval for components with intermittent demand with a small number of order reception history data counts and the like. Thus, the component demand prediction device 100 aims to predict the component demand using the following method.

### <Embodiment 1: Details of component demand prediction method>

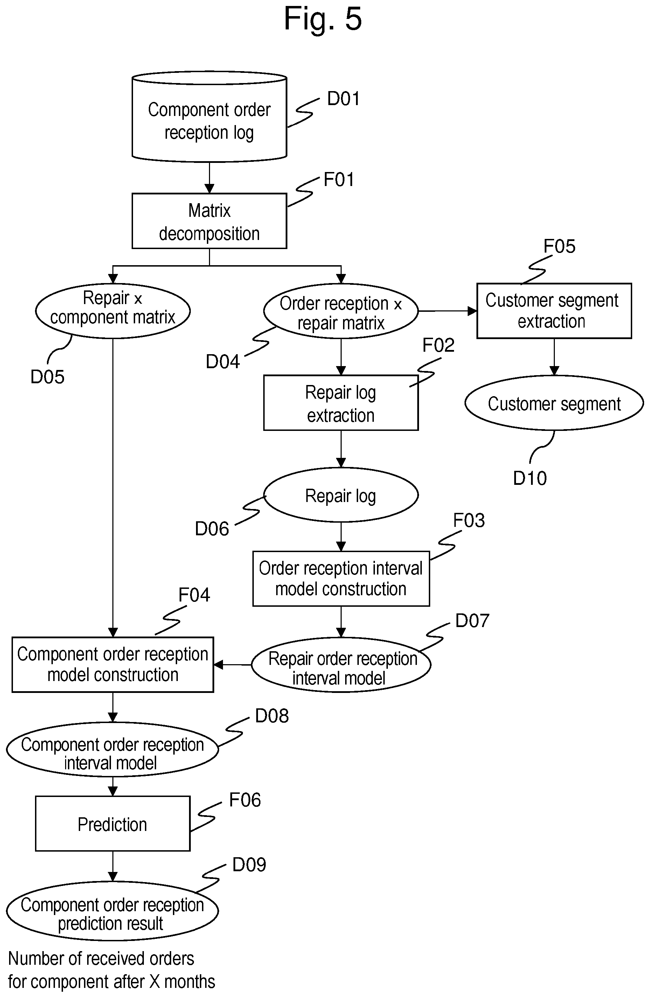

Fig. 5 is an overall flowchart explaining a method for predicting, by the component order reception model constructing section F00, the order reception interval for each component. F01 to F06 in Fig. 5 are sub-modules included in the component order reception model constructing section F00. The method for predicting the order reception interval by the component order reception model constructing section F00 will be described below in accordance with Fig 5.

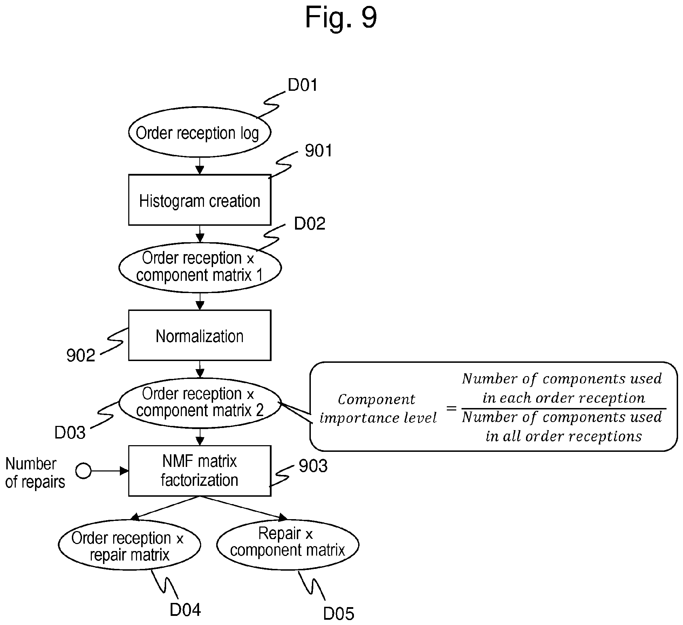

The matrix decomposition section F01 decomposes the component order reception log D01 into an order reception × repair matrix D04 (order reception-usage purpose data) and a repair × component matrix D05 (usage purpose-component data). The specific decomposition procedures will be described later using Fig 9.

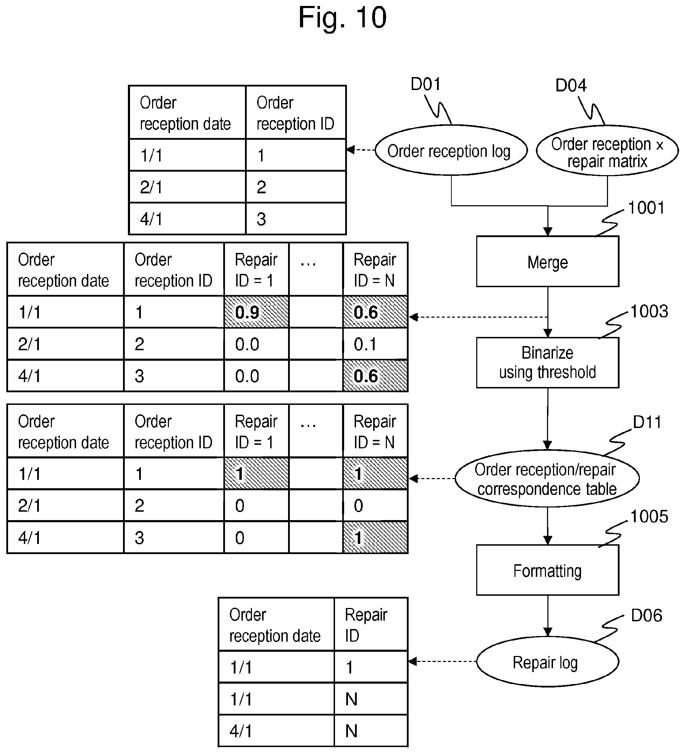

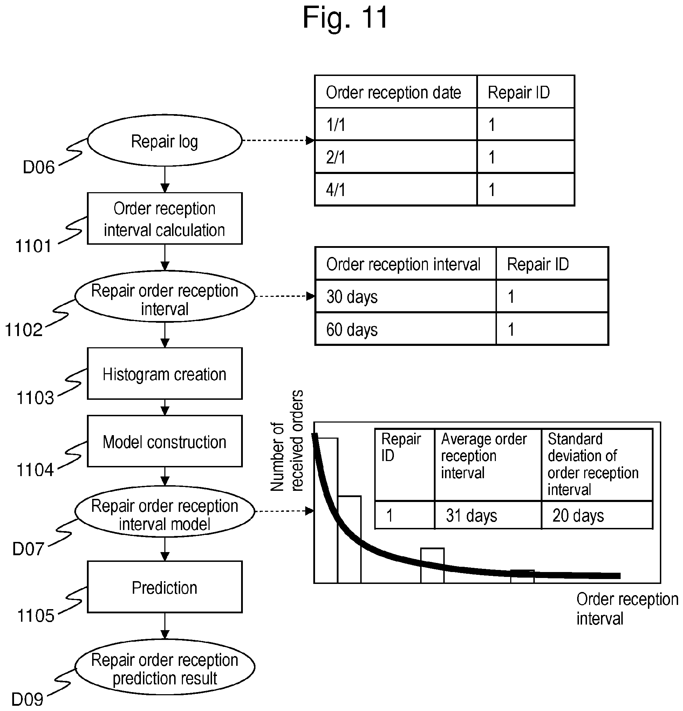

The repair log extraction section F02 extracts a repair log D06 from the component order reception log D01 and the order reception × repair matrix D04. The contents and extraction method of the repair log D06 will be described later using Fig. 10. The order reception interval model constructing section F03 constructs a repair order reception interval model D07 that mathematically represents the order reception interval for each repair item, using the repair log D06. The contents and construction method of the repair order reception interval model D07 will be described later using Fig. 11.

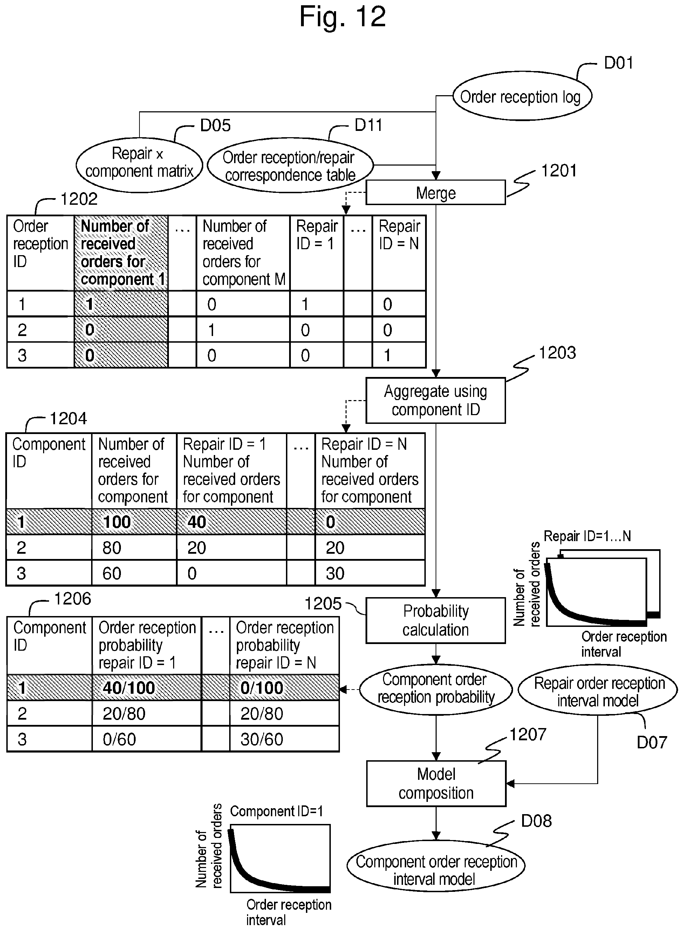

The component order reception model constructing section F04 constructs the component order reception interval model D08 that mathematically represents the order reception interval for each component, using the repair order reception interval model D07 and the repair × component matrix D05. The contents and construction method of the component order reception interval model D08 will be described later using Fig. 12.

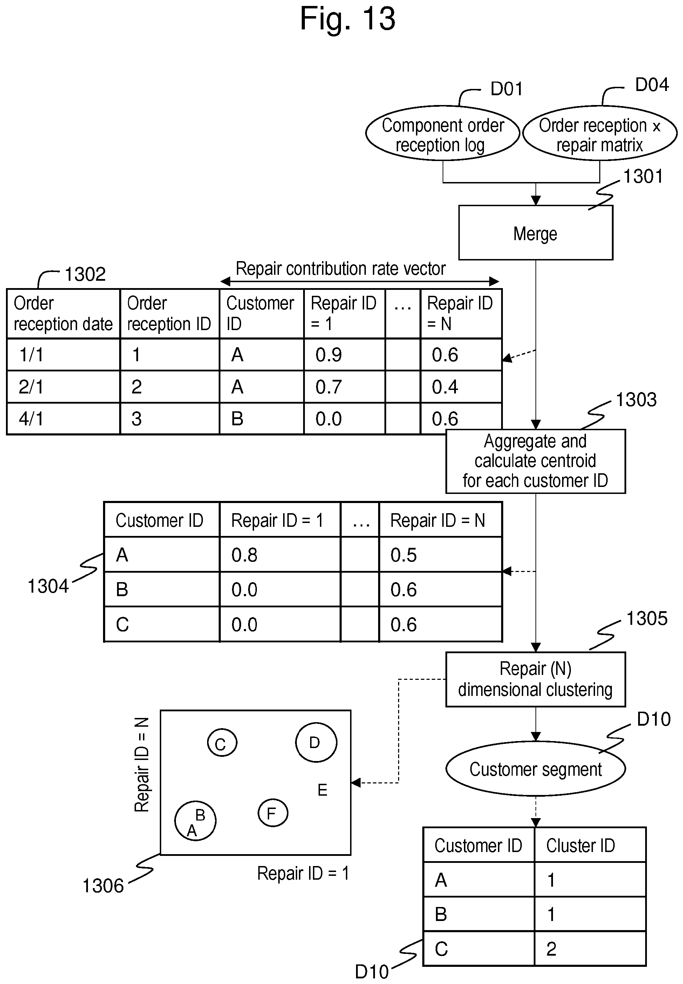

The customer segment extraction section F05 classifies customers using the order reception × repair matrix D04. The classification result is output as customer segment data D10. The specific classification method will be described later using Fig. 13.

The prediction section F06 predicts the order reception interval for each component using the component order reception interval model D08, and outputs the result as the component order reception prediction result D09. The prediction section F06 is substantially the same as the component order reception prediction section 108 and thus can also be constructed integrally with the component order reception prediction section 108.

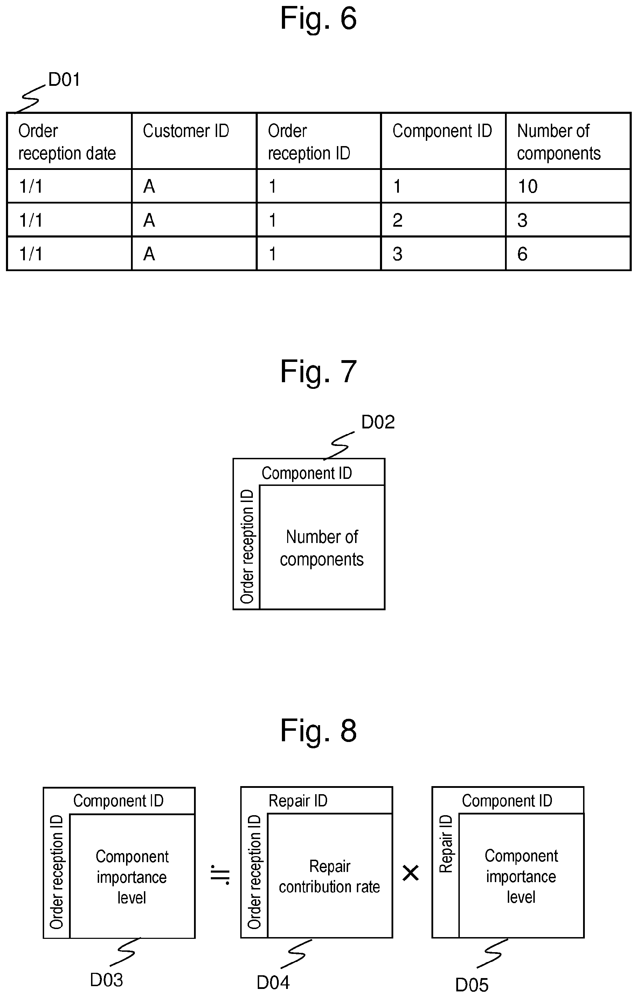

Fig. 6 shows the structure and a data example of the component order reception log D01. The component order reception log D01 is data that records the number of placed orders and the orderer (customer) for the component items for each order reception. There may be cases where multiple orders are received on the same date and where orders are received for multiple components in a single order. An order reception ID is an ID that identifies a single order.

Fig. 7 is an example of the order reception × component matrix D02. The order reception × component matrix D02 (order reception-component data) is intermediate data generated in the process of the processing performed by the matrix decomposition section FO1. The order reception × component matrix D02 is data describing the number of components ordered in each order described in the component order reception log D01, and describes the number of components for each combination of the order reception ID and a component ID. The order reception × component matrix D02 can be extracted from the component order reception log D01.

Fig. 8 is an example of the order reception × component matrix D03. The order reception × component matrix D03 (order reception-component data) is intermediate data generated in the process of the processing performed by the matrix decomposition section F01. The order reception × component matrix D03 is data obtained by normalizing the order reception × component matrix D02. The order reception × component matrix D03 can be decomposed into the order reception × repair matrix D04 and the repair × component matrix D05 by matrix decomposition. In other words, the order reception × component matrix D03 is substantially equivalent to a product of the order reception × repair matrix D04 and the repair × component matrix D05. This point will be described later again.

Fig. 9 is a flowchart explaining processing procedures performed by the matrix decomposition section F01. The matrix decomposition section F01 creates a histogram of the component order reception log D01 (step 901), thereby generating the order reception × component matrix D02. The order reception × component matrix D02 is the data explained in Fig. 7 and describes the number of components in each order reception. The matrix decomposition section F01 normalizes the order reception × component matrix D02, thereby generating the order reception × component matrix D03 (step 902). The matrix decomposition section F01 decomposes the order reception × component matrix D03 into the order reception × repair matrix D04 and the repair × component matrix D05 (step 903).

A certain component described in the order reception × component matrix D02 is focused. The ratio of the number of the components ordered in each order reception to the number of the components used in all the order receptions can be calculated. This ratio is referred to as a component importance level. By replacing the number of components with the component importance level, the order reception × component matrix D02 can be normalized. In step 902, the order reception × component matrix D03 is generated following the above procedures.

In Step 903, the order reception × component matrix D03 can be decomposed using a method such as NMF matrix factorization (Non-negative Matrix Factorization). The NMF matrix factorization is a method of decomposing a matrix before decomposition into a product of a basis vector and a contribution rate vector. The repair × component matrix D05 corresponds to the basis vector and describes the component importance level for each combination of the repair item and the component item. The order reception × repair matrix D04 corresponds to the contribution rate vector and describes the repair contribution rate for each combination of the order reception ID and the repair item.

Since the number of vector dimensions is required as a prerequisite for the NMF matrix factorization, the number of repair items needs to be input. The number of repair items is given such that the product of the order reception × repair matrix D04 and the repair × component matrix D05 is equivalent to the order reception × component matrix D03 as much as possible. For example, the computation may be repeated while changing the number of repair items until a decomposition result that is most equivalent to the order reception × component matrix D03 is obtained.

The matrix decomposition performed in step 903 is mechanically performed such that the product of the order reception × repair matrix D04 and the repair × component matrix D05 is equivalent to the order reception × component matrix D03 as much as possible (the error between the two is a minimum). Therefore, it should be noted that the repair items obtained in step 903 do not necessarily have practical meaning. However, by segmenting customers using the repair ID, the ordering tendency for each customer can be grasped. Further, since the component ID belonging to the repair ID can be obtained from the repair × component matrix D05, a representative one of the component IDs can be used to assign a provisional meaning to the repair ID. Therefore, it is possible to design sales promotion activities using these pieces of information.

Fig. 10 is a flowchart explaining processing procedures performed by the repair log extraction section F02. The repair log extraction section F02 extracts the repair log D06 from the component order reception log D01 and the order reception × repair matrix D04. The component order reception log D01 describes when the component was ordered. Meanwhile, the repair log D06 describes when the repair order was received. In other words, the repair log extraction section F02 converts a component order reception record described in the component order reception log D01 into a repair order reception record.

The repair log extraction section F02 merges the component order reception log D01 and the order reception × repair matrix D04 (step 1001). Specifically, for each component ID described in the component order reception log D01, the values for each repair ID described in the order reception × repair matrix D04 may be combined horizontally. As a result of the merging, for example, a matrix as in the second from the top in the left column of Fig. 10 is generated.

The repair log extraction section F02 binarizes the matrix generated in step 1001 in accordance with a threshold value (step 1003). Specifically, among the values introduced from the order reception × repair matrix D04, those equal to or greater than a threshold value (e.g., 0.5) are replaced with 1, and those less than the threshold value are replaced with 0. The matrix generated through this processing is referred to as an order reception/repair correspondence table D11 (order reception-usage purpose correspondence table). The order reception/repair correspondence table D11 is a data table that describes repair items for which the orders were received for each order reception ID.

The repair log extraction section F02 performs format conversion of (formats) the order reception/repair correspondence table D11, as necessary (step 1005). For example, when the order reception/repair correspondence table D11 describes multiple repair items in one row, the data format is reformatted so that one row describes only one repair item. Additionally, information regarding the order reception ID (i.e., individual order) is deleted. In the example of Fig. 10, the result obtained by reformatting as such is output as the repair log D06 (usage purpose order reception data). Therefore, the repair log D06 is data describing the order reception date and the repair item (repair ID) in combination, which describes when the repair order was received.

Fig. 11 is a flowchart explaining processing procedures performed by the order reception interval model constructing section F03. The order reception interval model constructing section F03 calculates the order reception interval (first order reception interval) for each repair item on the basis of the repair log D06 (step 1101). The calculation result is stored in the storage device 101 as repair order reception interval data 1102 (step 1102).

The order reception interval model constructing section F03 creates a histogram of the repair order reception interval data 1102 (step 1103), thereby generating the repair order reception interval model D07 (step 1104). The repair order reception interval model D07 is a model that mathematically describes the order reception interval for each repair item by approximating the histogram of the repair order reception interval data 1102 by, for example, gamma distribution. By generating the repair order reception interval model D07, it is possible to calculate the average order reception interval for each repair ID, the standard deviation of the order reception interval, and the like.

The order reception interval model constructing section F03 can predict the order reception interval for each repair item (repair ID) using the repair order reception interval model D07 (step 1105). The predicted result of the order reception interval for each repair item can be used as one of the outputs from the component demand prediction device 100. As the application of this output, for example, enhancing sales promotion activities for the repair ID if the order reception interval is gradually increasing can be considered.

Fig. 12 is a flowchart explaining processing procedures performed by the component order reception model constructing section F04. The component order reception model constructing section F04 generates the component order reception interval model D08 from the repair order reception interval model D07, the component order reception probability for each repair item, and the component order reception log D01. The component order reception interval model D08 is a model that mathematically describes the order reception interval (second order reception interval) for each component item.

The component order reception model constructing section F04 merges the repair × component matrix D05, the order reception/repair correspondence table D11, and the component order reception log D01 (step 1201). The order reception/repair correspondence table D11 describes for which repair item (repair ID) the order was received for each order reception ID. By merging the repair × component matrix D05 and the component order reception log D01 into the order reception/repair correspondence table D11, the number of received orders for each component item can be obtained for each order reception ID. The obtained result is defined as data 1202.

The component order reception model constructing section F04 aggregates the data 1202 for each component ID (component item) (step 1203). Specifically, the total number of received orders for each component ID is calculated, and the number of received orders for the component in each repair item is calculated. The sum of the number of received orders for the component for each repair item is equivalent to the total number of received orders for the component. The obtained result is defined as data 1204.

The component order reception model constructing section F04 calculates the component order reception probability for each repair item (step 1205). Specifically, the order reception probability is calculated by having the total number of received orders for the component as a denominator and the number of received orders for the component for each repair item as a numerator. The component order reception model constructing section F04 calculates a similar order reception probability for each component item. The calculation result is defined as component order reception probability data 1206.

The component order reception model constructing section F04 generates the component order reception interval model D08 using the component order reception probability data 1206 and the repair order reception interval model D07. The repair order reception interval model D07 describes a mathematical model of the order reception interval and the number of received orders for each repair item (repair ID). By multiplying the repair order reception interval model D07 for a certain repair ID by the record of the component order reception probability data 1206 corresponding to the repair ID, a mathematical model for the interval and the number of received orders for each component ID can be obtained.

In the example of Fig. 12, for example, by multiplying the repair order reception interval model D07 for the repair ID = 1 by the record of the repair ID = 1 of the component order reception probability data 1206, a mathematical model for the order reception interval and the number of received orders for each of the component ID = 1, the component ID = 2, and the component ID = 3 can be obtained. Fig. 12 shows only the model for the component ID=1.

Fig. 13 is a flowchart explaining processing procedures performed by the customer segment extraction section F05. The customer segment extraction section F05 calculates the repair contribution rate vector for each customer by performing statistic processing on the repair contribution rate vector, and classifies the customers on the basis of such calculation. Since the repair contribution rate vector represents the contribution rate of the repair item relative to the basis vector, classification of customers in accordance with repair items is considered possible by performing the statistic processing on the repair contribution rate vector. The customer classification by the customer segment extraction section F05 is based on such an idea.

The customer segment extraction section F05 merges the component order reception log D01 and the order reception × repair matrix D04 (step 1301). The order reception × repair matrix D04 describes the repair contribution rate vector for each order reception ID. By merging the component order reception log D01 into the order reception × repair matrix D04, the repair contribution rate vector can be associated with the customer ID. The merged result is defined as data 1302.

The customer segment extraction section F05 aggregates a portion of the repair contribution rate vector of the data 1302 and calculates the centroid for each customer ID (step 1303). The aggregated result is defined as data 1304. The data 1304 is data that describes multi-dimensional vectors of repair items for each customer ID. The numerical values of the repair contribution rate vectors are normalized so as to be on the same scale for each customer ID. For example, the numerical values are normalized so that the maximum value is 1.0 when aggregated.

The customer segment extraction section F05 performs clustering of the data 1304 in a multi-dimensional vector space of each repair item (repair ID) (step 1305). Customers in a group who have approximate tendencies of the repair contribution rate vector are located adjacent to each other in the vector space. By performing the clustering by assuming the customers having approximate vector distances as one cluster, the customers can be classified in accordance with repair items. That is, the customers who tend to order the same repair item can be assumed to be the same customer segment. The classification result is stored in the storage device 101 as the customer segment data D10.

### <Embodiment 1: Conclusion>

The component demand prediction device 100 according to the present embodiment decomposes the component order reception log D01 into the order reception × repair matrix D04 and the repair × component matrix D05, and generates the repair order reception interval model D07 using the order reception × repair matrix D04. The repair order reception interval model D07 describes the order reception interval for each repair item. Even for components with intermittent demand with a small number of order reception history data counts, the data counts can be increased by estimating the repair item. Further, the order reception interval for each repair interval is predicted by using the increased data counts so that the prediction accuracy can be improved.

### <Embodiment 2>

In Embodiment 1, generating each of the order reception × repair matrix D04 and the repair × component matrix D05 once in predicting the component demand has been described. However, these matrices differ in the speed in the change over time. Specifically, the repair × component matrix D05 gradually changes over time in accordance with generation updates of components, whereas the order reception × repair matrix D04 changes relatively rapidly over time due to the economic condition of the customer. Thus, in a second embodiment of the present invention, a processing example of adjusting the frequency of generating these matrices for each matrix will be described. The other configurations are the same as those of Embodiment 1.

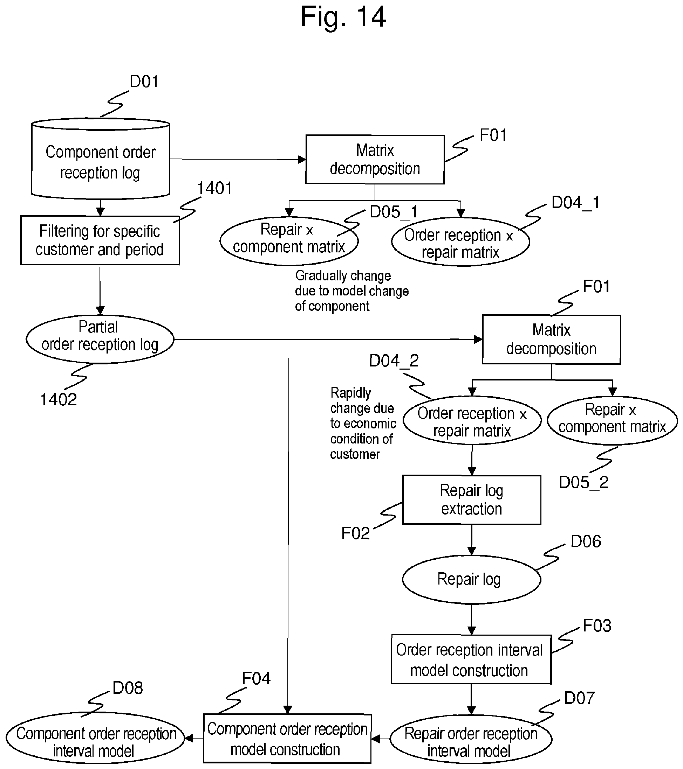

Fig. 14 is an overall flowchart explaining another method for predicting, by the component order reception model constructing section F00, the order reception interval for each component. In the present embodiment, the matrix decomposition section F01 generates the repair × component matrix D05 only once and generates the order reception × repair matrix D04 a plurality of times. That is, a plurality of order × repair matrices D04 is generated for one repair × component matrix D05. As a matter of convenience, a sub-number indicating at which iteration of the generation the matrix was generated is attached, and the matrices are represented as a repair × component matrix D05_1, an order reception × repair matrix D04_2, and the like.

As with Embodiment 1, the matrix decomposition section F01 decomposes the component order reception log D01 into an order reception × repair matrix D04_1 and the repair × component matrix D05_1. The component order reception model constructing section F04 constructs the component order reception interval model D08 in the same manner as in Embodiment 1, using the repair × component matrix D05_1 and the repair order reception interval model D07.

The order reception × repair matrix D04 changes relatively rapidly due to the economic condition of the customer. Thus, the component order reception model constructing section F00 performs filtering of the component order reception log D01 for each customer and each period (step 1401). The filtering generates a partial order reception log 1402. The matrix decomposition section FO1 performs the same matrix decomposition as that of Embodiment 1 on the partial order reception log 1402. That is, the partial order reception log 1402 for a specific customer during a specific period is divided into a repair × component matrix D05_2 and the order reception × repair matrix D04_2. The repair log extraction section F02, the order reception interval model constructing section F03, and the component order reception model constructing section F04 perform the same processing as that of Embodiment 1, using the order reception × repair matrix D04_2.

With the above processing, the component order reception interval model D08 focusing on the specific customer and the specific period can be constructed. By performing the same processing for each customer and each period, the component order reception interval model D08 can be constructed for each combination of the customer and the period. When a factor causing the repair × component matrix D05 to fluctuate occurs, in such a case in which a model change of a component is performed, the entire processing of Fig. 14 (or the processing of generating the repair × component matrix D05) may be performed again.

### <Embodiment 3>

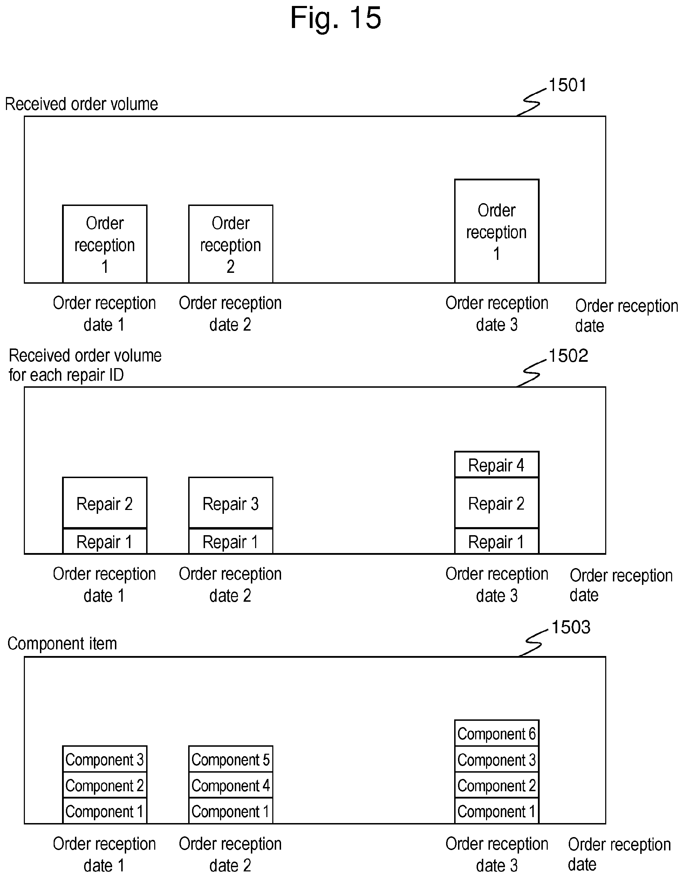

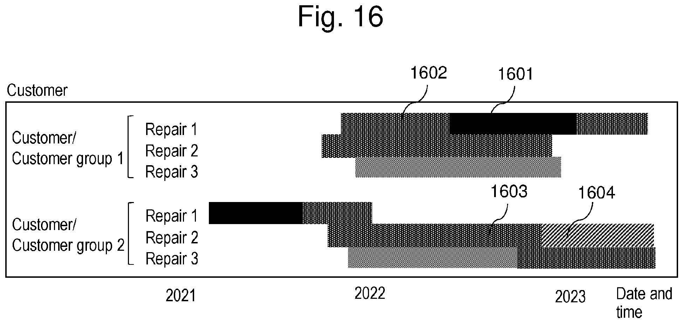

Fig. 15 is an example of a user interface provided by the component demand prediction device 100. For example, the component order reception model constructing section F00 generates screen interfaces of Fig. 15 and displays them on the display 105, so that these user interfaces can be provided. The example of Fig 16 is the same. The other configurations are the same as those of Embodiments 1 and 2.

A screen 1501 is an example of displaying order reception contents for each order reception date for a certain customer using the order reception ID. The horizontal axis represents the order reception date, and the vertical axis represents the received order volume for each order reception ID. The screen 1501 makes it possible to visually grasp whether an order was received and the received order volume.

A screen 1502 is an example of displaying order reception contents for each order reception date for a certain customer using the repair ID. The horizontal axis represents the order reception date, and the vertical axis represents the received order volume for each repair ID. The screen 1502 makes it possible to grasp what type of order the customer placed, using the repair item (repair ID). The type of order includes, for example, repair related to daily inspection and repair related to an under structure. Further, it is possible to visually grasp the change in tendency in the type of order.

A screen 1503 is an example of displaying order reception contents for each order reception date for a certain customer using the component item (component ID). The horizontal axis represents the order reception date, and the vertical axis represents the received order volume for each component ID. The screen 1503 makes it possible to visually grasp the order contents of the customer for each component item (component ID).

Fig. 16 is an example of a user interface provided by the component demand prediction device 100. Fig. 16 shows the change in the ordering tendency for each customer (or each customer group) in accordance with the change over time in the orders placed for repair items. The horizontal axis of Fig. 16 represents date and time, and the vertical axis represents the repair items for each customer/customer group. The density of the pattern indicates the order placing interval. An area with a high density indicates that the order placing interval is short (i.e., a large number of placed orders), while an area with a low density indicates that the order placing interval is long (i.e., a small number of placed orders). For example, in the ordering tendency of Customer Group 1 for Repair 1, a period 1601 shows that the order placing interval is shorter than that of a period 1602. Further, the order placing intervals of a period 1603 and a period 1604 for Repair 2 are both shown to be longer than the order placing interval of the period 1601.

By presenting the change over time for each repair item on the user interface as shown in Fig. 16, the change in the ordering tendency for each customer can be visually grasped. It is recognized that Customer Group 1 started new transactions from fiscal year 2022 and has a large number of orders for Repair 1. It is recognized that Customer Group 2 had orders mainly for Repair 1 in fiscal year 2021, but discontinued orders for Repair 1 from fiscal year 2022 and has started placing orders for Repair 2 and Repair 3. By visually presenting the change over time in the ordering tendency for each repair item in such a manner, sales promotion strategies can be effectively designed. For example, for Customer Group 2, it is possible to ensure stable orders for Repair 2 and Repair 3 while pursuing increase in the order for Repair 1.

### <Regarding modification of the present invention>

The present invention is not limited to the above-described embodiments, and includes various modifications. For example, it is possible to replace part of the configuration of one embodiment with the configuration of another embodiment, and it is possible to add the configuration of one embodiment to the configuration of another embodiment, without departing from the gist of the invention. Further, for part of the configuration of each embodiment, addition and deletion of and replacement with other configurations are available.

In the above embodiments, any two or more of the component order reception model constructing section F00, the sales promotion scenario recommendation section 110, the component order reception prediction section 108, the safety inventory estimation section 111, the number of placed orders for component determination section 112, and a number of placed orders for component determination section 109 may be constructed as a single module. For example, the component order reception model constructing section F00 and the component order reception prediction section 108 can be constructed as a single prediction section.

The above embodiments are made on the assumption that components are used for repair. The present invention is also applicable to cases where components are ordered for purposes other than repair. In that case, "repair" described in the above embodiments may be replaced with "usage purpose." Therefore, the component demand prediction device 100 predicts component demand for each usage purpose.

### Reference Signs List

- 100: Component demand prediction device
- F00: Component order reception model constructing section
- 108: Component order reception prediction section
- 110: Sales promotion scenario recommendation section
- 111: Safety inventory estimation section
- 112: Number of placed orders for component determination section

## Claims

1. A component demand prediction device that predicts a demand for a component, the device comprising an order reception interval prediction value computing section that computes a prediction value of an order reception interval for the component, wherein
the order reception interval prediction value computing section is configured to:
acquire, from a storage device, order reception-ordered component data that describes a relationship between an order reception for the component and a component item ordered in the order reception;
generate, from the order reception-ordered component data, order reception-usage purpose data that describes a relationship between the order reception and a usage purpose of the component item ordered; and
predict the demand for the component by calculating a first order reception interval that represents the order reception interval for the component item for each of the usage purpose on the basis of the order reception-usage purpose data.

2. The component demand prediction device according to claim 1, wherein
the order reception interval prediction value computing section is configured to:
generate the order reception-usage purpose data by decomposing the order reception-ordered component data into usage purpose-component data that describes a relationship between the usage purpose and the component item and the order reception-usage purpose data; and
when decomposing the order reception-ordered component data, convert the order reception-ordered component data into a product of a basis vector and a contribution rate vector, and adopt the basis vector as the usage purpose-component data and the contribution rate vector as the order reception-usage purpose data.

3. The component demand prediction device according to claim 2, wherein
the order reception-ordered component data describes a number of the component items for which an order is received in the order reception, for each combination of the order reception and the component item, and
the order reception interval prediction value computing section is configured to:
when decomposing the order reception-ordered component data, convert the number into a component importance level that represents a ratio of a number of the component items in each order reception to a total number of the component items in all the order receptions; and
when converting the order reception-ordered component data into the product of the basis vector and the contribution rate vector, convert the order reception-ordered component data after being converted into the component importance level into the product of the basis vector and the contribution rate vector.

4. The component demand prediction device according to claim 1, wherein
the order reception interval prediction value computing section is configured to:
convert the order reception-ordered component data into usage purpose order reception data that describes an order reception record of the usage purpose, by integrating the order reception-ordered component data and the order reception-usage purpose data; and
when calculating the first order reception interval, calculate the first order reception interval by calculating the order interval for each of the usage purpose using the usage purpose order reception data.

5. The component demand prediction device according to claim 4, wherein
when converting the order reception-ordered component data into the usage purpose order reception data, the order reception interval prediction value computing section is configured to:
depending on whether a value carried over from the order reception-usage purpose data contained in integration data obtained by integrating the order reception-ordered component data and the order reception-usage purpose data is equal to or greater than a threshold, convert the integration data into an order reception-usage purpose correspondence table that represents a correspondence relation between the order reception and the usage purpose; and
generate the usage purpose order reception data by formatting the order reception-usage purpose correspondence table in a record for each of the order reception.

6. The component demand prediction device according to claim 4, wherein
when calculating the first order reception interval, the order reception interval prediction value computing section is configured to:
calculate the order reception interval for each of the usage purpose from the order reception record described in the usage purpose order reception data;
construct a first mathematical model that mathematically describes the order reception interval for each of the usage purpose, by performing statistic processing on the order reception interval for each of the usage purpose; and
calculate the first order reception interval using the first mathematical model.

7. The component demand prediction device according to claim 2, wherein
the order reception interval prediction value computing section is configured to:
construct a first mathematical model that mathematically describes the order reception interval for each of the usage purpose;
calculate an order reception probability of the component item for each of the usage purpose;
construct a second mathematical model that represents the order reception interval for each of the component item using the order reception probability of the component item for each of the usage purpose and the first mathematical model; and
calculate a second order reception interval that represents the order reception interval for each of the component item using the second mathematical model.

8. The component demand prediction device according to claim 7, wherein
when calculating the order reception probability of the component item for each of the usage purpose, the order reception interval prediction value computing section is configured to:
generate, using the order reception-usage purpose data, an order reception-usage purpose correspondence table that describes whether the order reception was made for the usage purpose, for each combination of the order reception and the usage purpose;
integrate the order reception-usage purpose correspondence table and the usage purpose-component data;
aggregate an integration result of the order reception-usage purpose correspondence table and the usage purpose-component data for each of the component item; and
calculate the order reception probability of the component item for each of the usage purpose on the basis of a ratio of a number of received orders for the component item for each of the usage purpose to a total number of the component items.

9. The component demand prediction device according to claim 1, wherein
the order reception-ordered component data describes the order reception and the component item for each of customers; and
the order reception interval prediction value computing section classifies the customers for each of the usage purpose, by performing statistic processing, for each of the usage purpose, on the customers described in the order reception-ordered component data.

10. The component demand prediction device according to claim 9, wherein
when classifying the customers, the order reception interval prediction value computing section is configured to:
integrate the order reception-ordered component data and the order reception-usage purpose data;
perform statistic processing, for each of the customers, on an integration result of the order reception-ordered component data and the order reception-usage purpose data;
perform clustering of the customers in a vector space of the usage purpose on the basis of a result of the statistic processing; and
classify the customers on the basis of a result of the clustering.

11. The component demand prediction device according to claim 7, wherein
the order reception-ordered component data describes the order reception and the component item for each of customers, and
the order reception interval prediction value computing section is configured to:
generate the order reception-usage purpose data at least for each period or each of the customers; and
when calculating the second order reception interval, calculate the second order reception interval at least for each period or each of the customers, using the order reception-usage purpose data generated at least for each period or each of the customers.

12. The component demand prediction device according to claim 11, wherein
when calculating the second order reception interval, the order reception interval prediction value computing section calculates the second order reception interval using the usage purpose-component data as a unit, together with the order reception-usage purpose data for each period or each of the customers.

13. The component demand prediction device according to claim 1, wherein
the order reception-ordered component data describes the order reception and the component item for each of customers, and
the order reception interval prediction value computing section presents, for each of the customers, an order reception history for each of the usage purpose.

14. The component demand prediction device according to claim 1, wherein the order reception interval prediction value computing section presents a change over time in an order reception history for each of the usage purpose.
